# EUROPÄISCHE PATENTANMELDUNG

(11) **EP 2 463 484 A1**
(43) Veröffentlichungstag der Anmeldung: **13.06.2012**
(21) Anmeldenummer: 10194762.0
(22) Anmeldetag: 13.12.2010
(51) Int. Cl.: F01D 25/24

(54) **Rohrförmiges Gehäuse für eine Turbomaschine**

(71) Anmelder: SIEMENS AKTIENGESELLSCHAFT, 80333 München (DE)
(72) Erfinder: Hoffacker, Ralf, 47800, Krefeld (DE); Kostenko, Yevgen, 40878, Ratingen (DE); Schwass, Gerhard, 45478, Mülheim an der Ruhr (DE); Zimmermann, Adam, 45476, Mülheim a.d. Ruhr (DE); Seybold, Ralph, 40479, Düsseldorf (DE); Staubach, Reiner, 45133, Essen (DE)

(57) **Zusammenfassung**

Die Erfindung betrifft ein rohrförmiges Gehäuse (10) für eine Turbomaschine, umfassend zwei Halbrohrschalen (12, 13), die in zwei Verbindungsbereichen (14) aneinanderliegend jeweils in Tangentialrichtung des rohrförmigen Gehäuses (10) teilweise überlappen. Um eine besonders zuverlässige und dauerhafte Verbindung der beiden Halbrohrschalen (12, 13) anzugeben, die zudem eine besonders gute Dichtwirkung entfalten, wird vorgeschlagen, dass zum Verspannen der Halbrohrschalen (12, 13) in Tangentialrichtung - bezogen auf die Rohrachse des Gehäuses (10) - in einem oder beiden Verbindungsbereichen (14) zumindest ein Exzenterbolzen (20) vorgesehen ist.

## Beschreibung

Die Erfindung betrifft ein rohrförmiges Gehäuse für einen Abschnitt des Gehäuses einer Turbomaschine, umfassend zwei Halbrohrschalen, die in zwei Verbindungsbereichen aneinanderliegend jeweils in Tangentialrichtung des rohrförmigen Gehäuses überlappen.

Insbesondere bei zur Erzeugung von elektrischer Energie vorgesehenen Turbomaschinen ist es bekannt, deren Gehäuse aus zwei Gehäusehälften auszubilden. Beide Gehäusehälften sind dabei nach Art eines Halbrohres ausgebildet, so dass eine obere Gehäusehälfte und eine untere Gehäusehälfte vorhanden sind. An den Umfangsenden jeder Gehäusehälfte erstrecken sich in Radialrichtung des im Querschnitt gesehenen ringförmigen Gehäuses Flansche. Zwischen den aneinanderliegenden Flanschen der Gehäusehälften existiert eine Fuge, an der das Gehäuse geteilt ist. Aufgrund der hälftigen Aufteilung des Gehäuses kann auch von einer Teilungsebene gesprochen werden, wobei die Maschinenachse in dieser liegt. Die Teilungsebene wird dabei von dem Durchmesser des Gehäuses und seiner Axialrichtung aufgespannt. In den Flanschen ist eine Vielzahl von Bohrungen vorgesehen, durch welche sich jeweils einzelne Dehnschrauben erstrecken, die beiderseitig der Flansche verschraubt sind. Die Dehnschrauben pressen die in der Teilungsebene aneinanderliegenden Flansche unter großer Vorspannung dicht aneinander, um eine Leckageströmung vom im Innern geführten und unter hohem Druck stehenden Medium ins Äußere größtmöglich zu vermeiden, oder wenn überhaupt, nur in einem äußerst geringen Maße zuzulassen. Die vorbeschriebene, beispielsweise auch aus der EP 1 387 706 A1 bekannte Gehäuseanordnung wird insbesondere bei stationären und zur Energieerzeugung vorgesehenen Gasturbinen und auch bei Dampfturbinen eingesetzt.

Um eine größtmögliche Dichtigkeit der aneinanderliegenden Flansche zu erreichen, ist es notwendig, entlang der axialen Erstreckung des rohrförmigen Gehäuses unter vergleichsweise geringen Abständen eine größtmögliche Anzahl an Verschraubungen vorzusehen. Die Flansche bedingen jedoch, entlang des Umfangs des Gehäuses betrachtet, eine unterschiedlich große Anhäufung von Gehäusematerial. In Verbindung mit den beim Betrieb der vorgenannten Turbomaschinen auftretenden Temperaturen stellen sich lokal unterschiedliche schnelle Aufwärmungen des Gehäuses ein, je nach dem, ob mehr oder weniger Material vom im Innern strömenden aufgeheizten Arbeitsmedium aufzuwärmen ist oder nicht. Dies führt zu unterschiedlichen thermischen Dehnungen an unterschiedlichen Gehäusepositionen, wodurch sich das Gehäuse ovalisiert. Diese Ovalisierung kann zu ungleichmäßig großen Radialspalten zwischen Laufschaufelspitzen und der diesen gegenüberliegenden Wand und schlimmstenfalls zum Anstreifen der Laufschaufelspitzen an der Wand führen. Die ungleichmäßig großen Spalte können zu Performanceverlusten führen. Das Anstreifen gefährdet einerseits die Integrität der Schaufeln und andererseits den Betrieb der Gasturbine. Insofern besteht das Bestreben, die Ovalisierung so weit wie möglich zu vermieden. Daneben erwärmen sich die Flansche nur verzögert von innen nach außen, so dass die senkrecht zu den Flanschen angeordnete Verschraubung zusätzlich einer gewissen Biegespannung unterliegen, die zu plastischen Verformungen der gewöhnlich bereits bis zur Streckgrenze gedehnten Flanschverschraubungen führen können. Nach einer plastischen Verformung ist die von der betroffenen Dehnschraube aufgebrachte Vorspannung für die aneinanderliegenden Flansche verringert, was folglich die Dichtigkeit der Teilungsfuge negativ beeinflusst. Zudem verringern Kriecheffekte die Lebensdauer der Verschraubungen.

Als Alternativlösung zu den Flanschverbindungen von Gehäuseteilen ist aus der Offenlegungsschrift DE 10 2006 038 021 A1 ein Innengehäuse einer Dampfturbine bekannt, welches im Wesentlichen hohlzylindrisch ausgebildet ist. Die beiden das Gehäuse bildenden Gehäuseteile weisen im Bereich der Trennebene zwei einander gegenüberliegende Überlappungsbereiche mit jeweils aneinanderliegenden, in Umfangsrichtung überlappenden Wandabschnitten auf. Die überlappenden Wandabschnitte weisen jeweils lediglich die halbe Wandstärke der ansonsten vorhandenen Wandstärke auf, so dass in Umfangsrichtung betrachtet stets eine identische Wandstärke vorhanden ist. Die beiden einander überlappenden Wandabschnitte der Gehäuseteile sind dabei miteinander verschraubt. Insofern können damit die vorgenannten Nachteile hinsichtlich der unterschiedlichen Massenanhäufungen auf unterschiedlichen Positionen des Umfangs vermieden werden, was zu einer verminderten Ovalisierung des Gehäuses führt. Nachteilig ist jedoch, dass mit Hilfe der Verschraubungen keine ausreichende Flächenpressung der aneinanderliegenden Wandabschnitte erzeugt werden kann. Dies kann zu Relativbewegungen der aneinander gepressten Wandabschnitte führen, wodurch die Schrauben ggf. eine zusätzliche Scherbelastung erfahren können. Diese zusätzliche Belastung kann zu einem vorzeitigen Versagen der Schrauben führen, was den sicheren Betrieb einer damit ausgestatteten Turbomaschine gefährdet und zu Undichtigkeiten führen kann. Insofern besteht das Bestreben nach Lösungen, welche diese Mängel sicher ausschließen.

Abgesehen davon besteht das Bestreben, sowohl die Arbeitstemperatur des Arbeitsmediums der Turbomaschine als auch dessen Druck stetig zu erhöhen, um höhere Leistung und höhere Wirkungsgrade der Turbomaschine zu erreichen. Auch dies führt zu einer gesteigerten Anforderung hinsichtlich der Dichtigkeit der Verbindungsbereiche und dauerhaften Zuverlässigkeit von hälftig geteilten rohrförmigen Gehäusen einer Turbomaschine.

Der Erfindung liegt damit die Aufgabe zugrunde, ein aus zwei Rohrhälften bestehendes rohrförmiges Gehäuse für eine Turbomaschine anzugeben, welches unter Vermeidung der aus dem Stand der Technik bekannten Nachteile zudem besonders zuverlässig, langlebig und äußerst dicht ausgeführt ist.

Die Aufgabe wird gelöst mit einem rohrförmigen Gehäuse gemäß den Merkmalen des Anspruchs 1. Vorteilhafte Ausgestaltungen sind jeweils Gegenstand der Unteransprüche 2 bis 11.

Ein erfindungsgemäßes Gehäuse zeichnet sich dadurch aus, dass zum Verspannen der einander teilweise überlappenden Halbrohrschalen in Tangentialrichtung - bezogen auf die Rohrachse des Gehäuses - in einem oder beiden Verbindungsbereichen zumindest ein Exzenterbolzen vorgesehen ist.

Die Erfindung hat erkannt, dass die aus dem Stand der Technik bekannten Verschraubungen der einander in Tangentialrichtung überlappenden Wandabschnitte Querkräfte nur aufgrund von Reibung übertragen können. Um Abhilfe zu schaffen und größere Querkräfte aufnehmen zu können, kombiniert die Erfindung in bisher nicht bekannter Weise zwei Funktions- und Wirkprinzipien zur lösbaren Verbindung von geteilten Gehäusen. Gemäß der Erfindung wird vorgeschlagen, die in Tangentialrichtung auftretenden Querkräfte gemäß dem Lochleibungsprinzip zu übertragen. Dazu wird ein Bolzen vorgesehen, der spielfrei in entsprechend dimensionierten Bohrungen sitzt, welche jeweils einem Überlappungsabschnitt der betreffenden Halbrohrschale angeordnet sind. Gleichzeitig soll eine Relativverschiebung der beiden Halbrohrschalen möglich sein, um die Zentrizität des Gehäuses besser einstellen zu können und die beiden Halbrohrschalen in Tangentialrichtung miteinander zu verspannen. Aus diesem wird ein Abschnitt des Bolzens als Exzenter ausgebildet, so dass der dann als Exzenterbolzen ausgebildete Bolzen in Ahnlehnung an das Hebelprinzip eine Relativverschiebung bzw. das Verspannen der beiden Halbrohrschalen bei der Montage ermöglicht.

De facto werden die Querkräfte mit Hilfe mehrerer Exzenterbolzen aufgenommen bzw. übertragen. Hierzu sind im Verbindungsbereich vorzugsweise mehrere Exzenterbolzen axial verteilt vorgesehen, durch welche die beiden Halbrohrschalen des Gehäuses bei der Montage in Umfangsrichtung relativ zueinander bewegt und damit verspannt werden können. Die beiden Halbrohrschalen sind also mit Hilfe der Exzenterbolzen in Umfangrichtung gesehen spielfrei miteinander verbunden.

Im Betrieb werden die Exzenterbolzen als Scherbolzen belastet, ohne dass sie zusätzlich einer Zugbelastung ausgesetzt sind. Hierdurch ist es möglich, dass sie größere Kräfte aufnehmen, wodurch das erfindungsgemäße Gehäuse insbesondere weiter gesteigerte Drücke im Inneren des Gehäuses aufnehmen und beherbergen kann, ohne dass durch die im Verbindungsbereich vorhandene Teilfuge ungewöhnlich große oder unzulässig hohe Leckagen auftreten. Die Verwendung der höher belastbaren Exzenterbolzen führt somit auch zu einem sicheren Betrieb einer Turbomaschine, welche mit einem erfindungsgemäßen Gehäuse ausgestattet ist.

Gemäß einer ersten vorteilhaften Ausgestaltung der Erfindung weist der Exzenterbolzen einen Kopf zum Drehen des Exzenterbolzens, einen Exzenterabschnitt und einen Wellenabschnitt auf, wobei der Exzenterabschnitt im Verbindungsbereich in der einen der beiden Halbrohrschalen und der Wellenabschnitt im Verbindungsbereich in der anderen der beiden Halbrohrschalen angeordnet ist. Der Exzenterbolzen erstreckt sich somit quer zu den beiden einander teilweise überlappenden Halbrohrschalen und ist im Wesentlichen radial - in Bezug auf die Rohrachse des Gehäuses - ausgerichtet.

Besonders bevorzugt ist die Ausgestaltung, bei der der Wellenabschnitt oder der Exzenterabschnitt in einem Ausgleichselement gelagert ist, welches Ausgleichselement in bzw. gegenüber einer der beiden Halbrohrschalen axial verschieblich und drehgesichert gelagert ist. Hierdurch ist es möglich, bei Verstellen des Exzenterbolzens eine Relativbewegung der beiden Halbrohrschalen in Axialrichtung zu verhindern und nur eine Relativbewegung in Tangentialrichtung zu erhalten, da das Ausgleichselement die üblicherweise mit der Drehung des Exzenterbolzens auch gleichzeitig stattfindende axiale Relativverschiebung kompensieren, d.h. ausgleichen kann. Dazu ist erforderlich, dass das Ausgleichselement axialverschieblich, aber in Tangentialrichtung gegenüber der es aufnehmenden Halbrohrschale spielfrei gelagert ist. Folglich führen die beiden Halbrohrschalen dann nur noch eine tangentiale Relativverschiebung aus, was eine starre Befestigung des erfindungsgemäßen Gehäuses an seinen axialen Enden an weiteren Komponenten erlaubt.

In einer weiteren vorteilhaften Ausgestaltung sind die beiden Halbrohrschalen im betreffenden Verbindungsbereich mittels zumindest einer Verschraubung radial - in Bezug auf die Rohrachse des Gehäuses - verspannt, d.h. flächig aneinander gepresst. In Kombination mit der Exzenterbolzen-Verbindung von flächenförmigen Bauteilen - sprich den Halbrohrschalen - führt die zusätzliche Verwendung der Verschraubungen zu einer weiter verbesserten Verbindung, da die Überlappungsabschnitte an ihren sich in Tangentialrichtung erstreckenden Kontaktflächen zusätzlich auch Reibkräfte aufnehmen können. Außerdem wird dadurch ein inniger flächiger Kontakt der beiden Überlappungsabschnitte gewährleistet. Dies verhindert das Vorhandensein eines Luftspalts zwischen den Überlappungsabschnitten, welcher zu einem thermisch unterschiedlichen Verhalten der beiden Überlappungsabschnitte und somit zu unterschiedlichen mechanischen Belastungen führen würde. Mithin gewährleisten die Verschraubungen einen besonders guten Wärmeübergang zwischen den beiden Überlappungsabschnitten. Ferner wird der Verbindungsbereich durch die Verschraubung versteift. Durch die Verwendung der Exzenterbolzen werden zudem die Verschraubungen vor Scherkräften sicher geschützt. Dies gewährleistet eine dauerhaft zuverlässige Verschraubung der Gehäusehälften miteinander.

Besonders bevorzug ist dabei diejenige Ausgestaltung, bei dem in jedem Verbindungsbereich zumindest zwei in Umfangsrichtung benachbarte Verschraubungen vorgesehen sind. Hierdurch sind zwar vergleichweise lange Überlappungsabschnitte in Tangentialrichtung erforderlich, jedoch vergrößert diese Ausgestaltung die für Reibkräfte relevante Kontaktfläche einerseits und verlängert den Leckageweg für das im Inneren des Gehäuses geführte Medium andererseits. Zudem kann die Flächenpressung in der Kontaktfläche der Halbrohrschalen erhöht werden.

Nach einer weiteren vorteilhaften Ausgestaltung sind im betreffenden Verbindungsbereich mehrere Exzenterbolzen entlang der Axialrichtung verteilt, wobei die Exzenterbolzen jeweils über einen an ihnen befestigten Hebel an zumindest einem Gestänge zum synchronen Verstellen der Exzenterbolzen angelenkt sind. Voraussetzung hierfür ist lediglich, dass die Exzenterbolzen parallele Mittelachsen aufweisen und deren Lage bzw. Anordnung die Verwendung des Gestänges erlaubt. Durch den geringen Verdrehwinkel, welcher zur Erzeugung der Vorspannung erforderlich ist, können die Exzenterbolzen mit Hilfe von einzelnen Hebeln, die an einem gemeinsamen Gestänge angelenkt sind, auch problemlos miteinander gekoppelt werden. Durch das Betätigen des Gestänges werden die Exzenterbolzen synchron verstellt. Dies führt einerseits zu einer gleichmäßigen und verteilten Krafteinleitung zur Verspannung der beiden Halbrohrschalen in Tangentialrichtung. Andererseits ist die Montage dann sehr zeitsparend. Ein unerwünschtes Verziehen einer der beiden Halbrohrschalen durch sukzessives Anziehen der Exzenterbolzen wird hierdurch ebenfalls ausgeschlossen. Für den Fall, dass der Antrieb des Gestänges zudem selbsthemmend ist, sichert diese Ausgestaltung die Exzenterbolzen gegen ein ungewolltes selbsttätiges Lösen.

Ein weiterer Vorteil ergibt sich beim Einsatz von Dichtungen in den Teilfugenflächen. Folglich umfasst der betreffende Verbindungsbereich dann einen Dichtbereich, in dem ein Dichtmittel zur Abdichtung des inneren Gehäuseraums gegenüber dem äußeren Raum angesiedelt ist. Die Dichtmittel können dann ihre Funktion optimal erfüllen, da die durch von Exzenterbolzen erzwungene Relativbewegung bei der Montage die gleichzeitig einhergehende Deformierung des Dichtmittels gut vorhersagbar ist. Dadurch kann das Dichtmittel sehr gut an die Ausführungsform angepasst werden, was zu einer sehr hohen Dichtigkeit führt.

Unter der Rohrform des Gehäuses wird nicht zwingend eine zylindrische Form verstanden. Vielmehr bedeutet rohrförmig im Querschnitt im Wesentlichen kreisförmig. Demnach kann zweckmäßigerweise sich das Gehäuse entlang seiner Axialrichtung auch im Durchmesser verändern. Es kann also auch im erfindungsgemäßen axialen Abschnitt konisch ausgebildet sein. Auch besteht die Möglichkeit, dass das Gehäuse als Leitschaufelträger einer Turbomaschine ausgebildet ist, welcher an seiner nach Innen weisenden Mantelfläche Mittel zur Befestigung von in einem Ring oder in mehreren Ringen angeordneten Leitschaufeln aufweist. Selbstverständlich kann auch ein Außengehäuse eines stationären Verdichters oder einer stationären Turbine, beispielsweise Dampfturbine oder Gasturbine, zumindest einen axialen Abschnitt umfassen, welcher als rohrförmiges Gehäuse im Sinne der voran beschriebenen Ausgestaltungen ausgebildet ist.

Weitere Vorteile, Merkmale und Eigenschaften der Erfindung werden anhand eines bevorzugten Ausführungsbeispiels in der folgenden Zeichnung näher erläutert. Zweckmäßige Ausgestaltungen ergeben sich durch vorteilhafte Kombinationen von Merkmalen. Es zeigen:
- Figur 1: einen Teil des Querschnitts eines rohrförmigen Gehäuses gemäß einer ersten Ausgestaltung,
- Figur 2: einen Exzenterbolzen in einer Seitenansicht,
- Figur 3: eine Seitenansicht eines Gehäuses gemäß einer alternativen Ausgestaltung und
- Figur 4: den Ausschnitt aus dem Querschnitt des Gehäuses nach Figur 1 mit einer alternativen Überlappung.

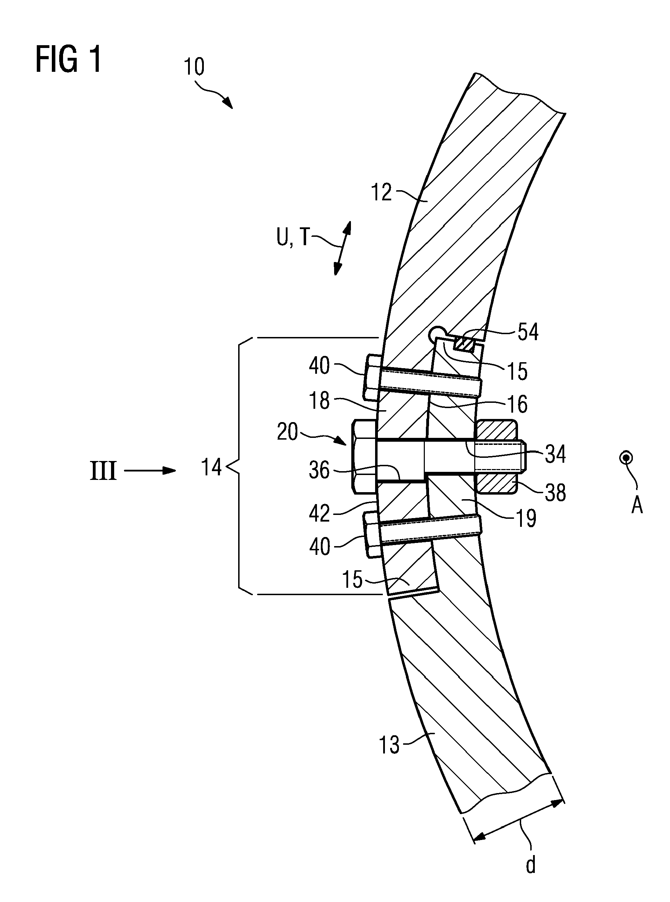

Ein rohrförmiges Gehäuse 10 für eine Turbomaschine ist in Querschnittsdarstellung in Figur 1 ausschnittsweise gezeigt. Das Gehäuse 10 umfasst zwei Halbrohrschalen 12, 13, welche sich jeweils über eine Bogenlänge von etwas mehr als 180° erstrecken. Die beiden Halbrohrschalen 12, 13 weisen dabei über einen Großteil ihrer Bogenlänge eine Wandstärke d auf, die entlang dieser Erstreckung konstant ist. Daran schließen sich an jedem Umfangsende jeweils Überlappungsabschnitte 18, 19 der Halbrohrschalen 12, 13 an, deren Wandstärke lediglich die Hälfte der Wandstarke d beträgt. Aus Festigkeitsgründen können die Wanddicken der Überlappungsabschnitte 18, 19 jedoch auch geringfügig größer sein als die Hälfte der Wandstärke d. Die beiden Überlappungsabschnitte 18, 19 enden jeweils an den Umfangsendpunkten 15. Somit überlappen die beiden Halbrohrschalen 12, 13 in einem Verbindungsbereich 14, wobei die Überlappungsabschnitte 18, 19 in einem Kontaktbereich 16 flächig aneinander liegen. Üblicherweise umfasst das rohrförmige Gehäuse 10 dabei zwei Verbindungsbereiche 14, die aneinander gegenüberliegenden Positionen des Umfangs des Gehäuses 10 angesiedelt sind.

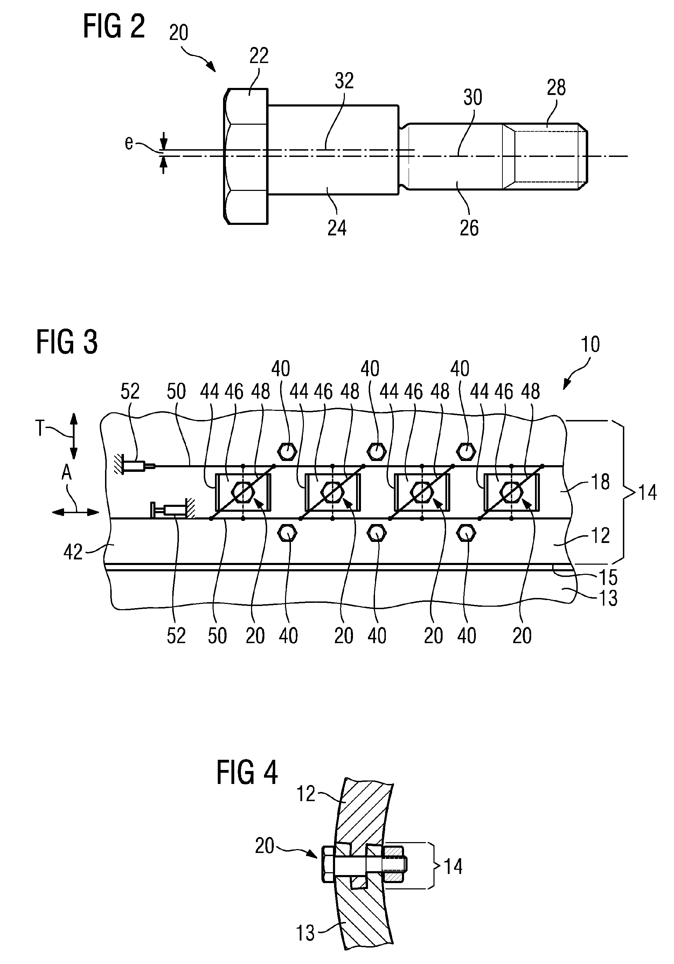

Im Verbindungsbereich 14 sind die beiden Halbrohrschalen 12, 13 mit Hilfe zumindest eines Exzenterbolzens 20 miteinander verbunden. Der Exzenterbolzen 20 ist in FIG 2 in einer Seitenansicht dargestellt. Er umfasst aufeinanderfolgend einen Exzenterkopf 22, an den sich aufeinanderfolgend ein Exzenterabschnitt 24, ein Wellenabschnitt 26 und ein Gewindeabschnitt 28 anschließen. Der Wellenabschnitt 26 weist dabei eine Mittelachse 30 auf, die mit der Mittelachse des Exzenterkopfes 22 zusammenfällt. Bekanntermaßen ist die Mittelachse 32 des Exzenterabschnitts 24 um einen Abstand e von der Mittelachse 30 des Wellenabschnitts 26 versetzt.

Der Exzenterkopf 22 ist im gezeigten Ausführungsbeispiel als Außensechskant ausgebildet. Selbstverständlich kann der Exzenterkopf 22 auch für andere Formen des Kraftangriffs - wie zum Beispiel Innensechskant oder radiale Bohrungen zur Aufnahme einer Drehstange - ausgebildet sein.

In den beiden Überlappungsabschnitten 18, 19 sind jeweils eine Bohrung vorgesehen. Die im Überlappungsabschnitt 19 angesiedelte Bohrung 34 weist einen Durchmesser auf, welcher dem Durchmesser des Wellenabschnitts 26 des Exzenterbolzens 20 entspricht. Ebenso weist die im Überlappungsabschnitt 18 angesiedelte Bohrung 36 den gleichen Durchmesser auf wie der Exzenterabschnitt 24 des Exzenterbolzens 20. Wie aus FIG 1 ersichtlich, ist der Exzenterbolzen 20 von außen in die entsprechenden Bohrungen 34, 36 der Überlappungsabschnitte 18, 19 passend eingesetzt, so dass der Gewindeabschnitt 28 in das Innere des Gehäuses 10 hineinragt. Auf dem Gewindeabschnitt 28 ist eine gegen Lösen gesicherte Schraubenmutter 38 aufgeschraubt, wodurch der Exzenterbolzen gegen Verlust gesichert ist. Durch Verdrehen des Exzenterbolzens 20 um seine Mittelachse 30 wirkt eine Kraft auf die beiden Halbrohrschalen 12, 13, die zu einer Relativbewegung der beiden betreffenden Halbrohrschalen 12, 13 führt. Hierdurch lassen sich die beiden Halbrohrschalen 12, 13 in Umfangsrichtung U gegeneinander verspannen, was insbesondere dann wichtig ist, wenn im Innern des Gehäuses 10 ein wesentlich größerer Druck herrscht als im Außenraum oder wenn kein separates Dichtmittel zur Abdichtung der Fuge vorgesehen ist. Gleichzeitig sind die beiden Überlappungsabschnitte 18, 19 der Halbrohrschalen 12, 13 durch zwei nur schematisch dargestellte Verschraubungen 40 im Kontaktbereich 16 flächig aneinandergepresst. Da die Verschraubungen 40 von außen montiert werden, sind diese in den Überlappungsabschnitt 19 der Halbrohrschale 13 eingeschraubt.

Anstelle der in Figur 1 gezeigten Überlappung kann auch eine zweischnittige Variante des Verbindungsbereichs 14, wie sie in Figur 4 schematisch dargestellt ist, verwendet werden. Diese hat den Vorteil, dass die Kontaktfläche im Verbindungsbereich weiter vergrößert ist gegenüber der in Figur 1 dargestellten Ausführungsform. Dies verlängert den Weg der durch die Fuge ggf. auftretenden Leckage und vergrößert die Dichtfläche.

Die axiale Sicherung des Exzenterbolzens 20 muss nicht zwingend von Innen mittels einer selbstsichernden Schraubenmutter 38 erfolgen. Anstatt dieser kann auch von Außen eine Sicherung gegen Verlust vorgesehen sein, was eine vereinfachte Montage der Sicherung mit sich bringt. Beispielsweise kann ein Bügel oder eine Platte den axialen Verschiebweg des Exzenterbolzens 20 blockieren und so die Sicherung bewirken.

Eine alternative, bevorzugte Ausgestaltung der in Figur 1 dargestellten Ausführungsform ist in Figur 3 in einer Seitenansicht des Verbindungsbereichs 14 gezeigt, wobei zu FIG 1 identische Merkmale mit identischen Bezugsnummern bezeichnet sind. Die Ausgestaltung gemäß Figur 3 unterscheidet sich von der Ausgestaltung gemäß Figur 1 darin, dass im Überlappungsabschnitt 18 je Exzenterbolzen 20 eine in der Kontur rechteckige Ausnehmung 44 vorgesehen. Die Ausnehmung 44 durchdringt den Überlappungsabschnitt 18 vollständig und ist lediglich in Figur 3 dargestellt. In jeder Ausnehmung 44 ist ein rein axial verschiebliches Ausgleichselement 46 in Form eines sog. Kulissensteins zumindest teilweise eingelassen. Das Ausgleichselement 46 weist wiederum eine Bohrung auf, in welcher der Exzenterabschnitt 24 des Exzenterbolzens 20 spielfrei gelagert ist. Der Durchmesser der Bohrung des Ausgleichselements 46 entspricht also exakt dem Durchmesser des Exzenterabschnitts 24 des Exzenterbolzens 20. Wie bei der Ausgestaltung nach FIG 1 sitzt der Wellenabschnitt 26 des Exzenterbolzens 20 spielfrei in der Bohrung 34 des Überlappungsabschnitts 19. Die Kontur des Ausgleichselements 46 entspricht im Wesentlichen der Kontur der Ausnehmung 44, wodurch das Ausgleichselement 46 drehgesichert in der Ausnehmung 44 gehalten. Die axiale Erstreckung des Ausgleichselements 46 ist kleiner als die der Ausnehmung 44, wodurch das Ausgleichselement 46 axial verschieblich in der Ausnehmung 44 gelagert ist. In Tangentialrichtung T betracht sind die Erstreckungen der Ausnehmung 44 und des Ausgleichselements 46 jedoch identisch, um eine spielfreien Sitz des Ausgleichselements 46 in der Ausnehmung 44 zu gewährleisten, damit der Exzenterbolzen 20 der Scherbelastung ausgesetzt wird.

Da üblicherweise beide Halbrohrschalen 12, 13 des Gehäuses 10 in ihrer axialen Bewegung sehr eingeschränkt sind, besteht mit Hilfe des Ausgleichselements 46 auch dann die Möglichkeit, den bzw. die Exzenterbolzen 20 zum tangentialen Verspannen der beiden Halbrohrschalen 12, 13 zu verwenden, da die beim Drehen des Exzenterbolzens 20 ansonsten mit einhergehende axiale Verschiebung der beiden Halbrohrschalen 12, 13 zueinander durch das axial verschiebliche, drehgesicherte Ausgleichselement 46 kompensiert werden kann.

Bei einer alternativen, nicht gezeigten Ausgestaltung mit einem Kulissenstein kann die Ausnehmung 44 auch als eine nur oberflächliche Tasche an der nach außen gewandten Fläche 42 (vgl. FIG 1) des Überlappungsabschnitts 18 angeordnet sein. In diesem Fall weist die Ausnehmung 44 eine Tiefe auf, welche geringer ist als die halbe Wandstärke d. Die im Überlappungsabschnitt 18 der Halbrohrschale 12 angesiedelte Bohrung 36 ist dann im Durchmesser größer als der Durchmesser des Exzenterabschnitts 24 des Exzenterbolzens 20, wodurch letztgenannter spielbehaftet im Überlappungsabschnitt 18 sitzt, um die Verschiebbarkeit des Kulissensteins nicht einzuschränken.

Die Anordnung der Ausnehmung 44 und des Ausgleichselements 46 ist natürlich auch im Überlappungsabschnitt 19 möglich.

Gemäß der in FIG 3 dargestellten Ausführungsform weist der Verbindungsbereich 14 eine Axialerstreckung auf, in dem eine Vielzahl von Exzenterbolzen 20 und ebenso eine weitere Vielzahl von vorgespannten Verschraubungen 40 entlang der Axialrichtung A in einem Raster verteilt sind. Hierdurch lässt sich ein axialer Verbindungsbereich realisieren. Um Verspannungen in den einzelnen Halbrohrschalen 12, 13 beim Verspannen durch die Exzenterbolzen 20 zu verhindern, ist vorgesehen, dass die betreffenden Exzenterbolzen 20 synchron gedreht werden. Dazu ist an jedem Exzenterbolzen 20 jeweils ein Hebel 48 starr befestigt, dessen Enden jeweils an einem Gestänge 50 angelenkt sind. Die beiden in FIG 3 gezeigten Gestänge 50 sind über hydraulisch betätigte Kolben 52 gegensinnig in Axialrichtung verschiebbar, was zur Folge hat, dass über die daran angelenkten Hebel 48 alle daran gekoppelten Exzenterbolzen 20 bei der Montage synchron um den gleichen Winkel geschwenkt werden können. In FIG 3 sind zwei Positionen der Hebel 48 in unterschiedlicher Linienart dargestellt.

Ferner besteht die Möglichkeit, den inneren Gehäuseraum gegenüber dem äußeren Raum mit Hilfe eines Dichtmittels 54 abzudichten.

Insgesamt betrifft die Erfindung somit ein rohrförmiges Gehäuse 10 für eine Turbomaschine, umfassend zwei Halbrohrschalen 12, 13, die in zwei Verbindungsbereichen 14 aneinanderliegend jeweils in Tangentialrichtung des rohrförmigen Gehäuses 10 teilweise überlappen. Um eine besonders zuverlässige und dauerhafte Verbindung der beiden Halbrohrschalen 12, 13 anzugeben, die zudem eine besonders gute Dichtwirkung entfalten, wird vorgeschlagen, dass zum Verspannen der Halbrohrschalen 12, 13 in Tangentialrichtung - bezogen auf die Rohrachse des Gehäuses 10 - in einem oder beiden Verbindungsbereichen 14 zumindest ein Exzenterbolzen 20 vorgesehen ist.

## Patentansprüche

1. Rohrförmiges Gehäuse (10) für eine Turbomaschine, umfassend zwei Halbrohrschalen (12, 13), die in zwei Verbindungsbereichen (14) aneinanderliegend jeweils in Tangentialrichtung (T) des rohrförmigen Gehäuses (10) überlappen, **dadurch gekennzeichnet, dass**
zum Verspannen der Halbrohrschalen (12, 13) in Tangentialrichtung (T) - bezogen auf die Rohrachse des Gehäuses (10)
- in einem oder beiden Verbindungsbereichen (14) zumindest ein Exzenterbolzen vorgesehen (20) ist.

2. Gehäuse (10) nach Anspruch 1,
bei dem der Exzenterbolzen (20)
einen Kopf (22) zum Drehen des Exzenterbolzens (20), einen Exzenterabschnitt (24) und
einen Wellenabschnitt (26) aufweist,
wobei der Exzenterabschnitt (24) im Verbindungsbereich (14) in der einen der beiden Halbrohrschalen (12) und
der Wellenabschnitt (26) im Verbindungsbereich (14) in der anderen der beiden Halbrohrschalen (13) angeordnet ist.

3. Gehäuse (10) nach Anspruch 2,
bei dem der Wellenabschnitt (26) oder der Exzenterabschnitt (28) in einem Ausgleichselement (46) gelagert ist, welches Ausgleichselement (46) in bzw. gegenüber einer der beiden Halbrohrschalen (13) axial verschieblich drehgesichert gelagert ist.

4. Gehäuse (10) nach Anspruch 1, 2 oder 3,
bei dem die beiden Halbrohrschalen (12, 13) im betreffenden Verbindungsbereich (14) mittels zumindest einer Verschraubung (40) radial - in Bezug auf die Rohrachse des Gehäuses (10) - verspannt sind.

5. Gehäuse (10) nach Anspruch 4,
bei dem in jedem Verbindungsbereich (14) zumindest zwei in Umfangrichtung (U) benachbarte Verschraubungen (40) vorgesehen sind.

6. Gehäuse (10) nach einem der vorangehenden Ansprüche,
bei dem im betreffenden Verbindungsbereich (14) mehrere Exzenterbolzen (20) entlang der Axialrichtung verteilt sind.

7. Gehäuse (10) nach einem der vorangehenden Ansprüche,
bei dem jeweils über einen an den Exzenterbolzen (20) befestigten Hebel (48) an einem Gestänge (50) zum synchronen Verstellen der Exzenterbolzen (20) angelenkt sind.

8. Gehäuse (10) nach einem der vorangehenden Ansprüche, bei dem der betreffende Verbindungsbereich (14) einen Dichtbereich umfasst, in dem ein Dichtmittel (54) zur Abdichtung des inneren Gehäuseraums gegenüber dem äußeren Raum angesiedelt ist.

9. Gehäuse (10) nach einem der vorangehenden Ansprüche,
das sich entlang seiner Axialrichtung im Durchmesser verändert.

10. Leitschaufelträger für einer Turbomaschine,
ausgebildet als rohrförmiges Gehäuse (10) nach einem der vorangehenden Ansprüche.

11. Außengehäuse für einen stationären Verdichter oder für eine stationäre Turbine,
umfassend zumindest einen axialen Abschnitt, welcher als rohrförmiges Gehäuse (10) nach einem der Ansprüche 1 bis 9 ausgebildet ist.
